# EUROPEAN PATENT SPECIFICATION

(11) **EP 2 584 153 B1**
(45) Date of publication and mention of the grant of the patent: **09.01.2019**
(21) Application number: 12188414.2
(22) Date of filing: 12.10.2012
(51) Int. Cl.: F01D 25/16, F02K 3/06, F02C 7/06, F02C 7/20, F02C 7/36, F02C 3/107, F01D 5/06

(54) **Gas turbine engine and method of disassembly**
Gasturbine und Verfahren zur Demontage
Moteur à turbine à gaz et procédé de démontage

(30) Priority: 17.10.2011 US 201113275286; 27.10.2011 US 201113282919; 29.02.2012 US 201213407916
(43) Date of publication of application: 24.04.2013
(73) Proprietor: United Technologies Corporation, Farmington, CT 06032 (US)
(72) Inventor: Otto, John R., Middletown, CT Connecticut 06457 (US); Sharma, Sunil, Rocky Hill, CT Connecticut 06067 (US); Davis, Todd A., Tolland, CT Connecticut 06084 (US); Cigal, Brian P., Windsor, CT Connecticut 06095 (US)
(74) Representative: Dehns

(56) References cited:
- EP-A1- 1 890 054
- EP-A2- 1 114 949
- US-A- 3 922 852
- US-A1- 2010 105 516
- US-A1- 2010 150 702

## Description

### BACKGROUND

The present disclosure relates to a gas turbine engine, and in particular, to a case structure therefor.

Gas turbine engines typically include one or more rotor shafts that transfer power and rotary motion from a turbine section to a compressor section and fan section. The rotor shafts are supported within an engine static structure, which is typically constructed of modules with individual case sections which are joined together at bolted flanges. The flanges form a joint capable of withstanding the variety of loads transmitted through the engine static structure. An ongoing issue for gas turbine engines is the ease and speed at which certain components in such engines can be serviced.

A prior art gas turbine engine, having the features of the preamble of claim 1, is disclosed in US-2010/0105516. A flexible shaft for a gas turbine engine is disclosed in US-2010/0150702.

### SUMMARY

According to the present invention, there is provided a gas turbine engine as claimed in claim 1 and a method as claimed in claim 14.

In an embodiment of the above, the central body support includes circumferentially spaced apart vanes that radially extend between and interconnect the inner annular wall and an outer annular wall.

In a further embodiment of the above, the first splines include tooth groups including multiple teeth. The tooth groups are circumferentially spaced apart from one another with untoothed regions arranged between the tooth groups.

In a further embodiment of the above, the vanes are circumferentially aligned with the untoothed regions.

In a further embodiment of the above, the second splines include corresponding tooth groups that are configured to circumferentially align and mate with the tooth groups of the first splines, and corresponding untoothed regions are arranged between the tooth groups of the corresponding tooth groups.

In a further embodiment of the above, the central body support includes multiple fastener bosses that are circumferentially spaced from one another. The clusters of fastener bosses are aligned with the tooth groups.

In a further embodiment of the above, the untoothed region is provided by a stiffening rail protruding radially inward from a central body section that provides the inner annular wall.

In a further embodiment of the above, the central body support includes an annular recess and an annular pocket that are axially spaced apart from one another to provide first and second lateral sides on the stiffening rail.

In a further embodiment of the above, the tooth groups include internal teeth that have roots provided at a first tooth radius and extend radially inward to crests provided at a second tooth radius. The stiffening rail extends radially inward to a rail radius that is less than the first tooth radius.

In a further embodiment of the above, the geared architecture includes an epicyclic gear train having a sun gear, a ring gear, and intermediate gears arranged circumferentially about the sun gear and intermeshing with the sun gear and the ring gear.

In a further embodiment of the above, the intermediate gears are star gears grounded to the flex support against rotation about the axis. The sun gear is supported by the spool, and the ring gear is interconnected to the fan.

In a further embodiment of the above, the central body support includes a first inner face arranged near the first spline, and the flex support includes a first outer face arranged in an interference fit relationship with the first inner face to radially locate the flex support relative to the central body support.

In a further embodiment of the above, the central body support includes a second inner face, and the flex support includes a second outer face arranged in an interference fit relationship with the second inner face. The first inner and outer faces are arranged forward of the first spline and the second inner and outer faces are arranged aft of the first spline. The second outer face is positioned radially inward relative to the first outer face.

In a further embodiment of the above, fasteners secure the flex support to the central body support, and the fasteners include heads facing forward.

In a further embodiment of the above, the central body support includes circumferentially spaced fastener bosses, and the flex support includes a radially outward extending fastener flange that abuts the fastener bosses to axially locate the flex support relative to the central body support.

In a further embodiment of the above, the fastener flange includes apertures that are arranged circumferentially spaced from one another and receive the fasteners.

In an embodiment of the above method, the accessing step includes the step of detaching a fan module from a fan shaft bearing support, with the fan shaft bearing support remaining secured to the central body support.

In a further embodiment of the above, the accessing step includes the step of detaching the fan shaft bearing support from the central support body without removing the geared architecture.

In a further embodiment of the above, the decoupling step includes removing a geared architecture module that includes the geared architecture and the flex support. The decoupling step leaves undisturbed a bearing that supports a front of a spool operatively connectable with the geared architecture.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of an embodiment of a gas turbine engine;
Figure 2 is an enlarged cross-section of a front center body assembly portion of the gas turbine engine embodiment shown in Figure 1;
Figure 3 is an enlarged cross-section of the geared architecture of the gas turbine engine embodiment shown in Figure 1;
Figure 4 is an exploded perspective view of the front center body assembly of the turbine engine embodiment shown in Figure 1;
Figure 5 is an enlarged perspective partial cross-section of a front center body support of the front center body assembly of the turbine engine embodiment shown in Figure 1;
Figure 6 is an enlarged sectional view of the front center body support of the turbine engine embodiment shown in Figure 1;
Figure 6A is a perspective view of the center body support of the turbine engine embodiment shown in Figure 1;
Figure 6B is an end view of the center body support of the turbine engine embodiment shown in Figure 1;
Figure 7 is an exploded view of the front center body support of the turbine engine embodiment shown in Figure 1; and
Figure 8 is a schematic view of an embodiment of a forward gearbox removal from a gas turbine engine.

### DETAILED DESCRIPTION

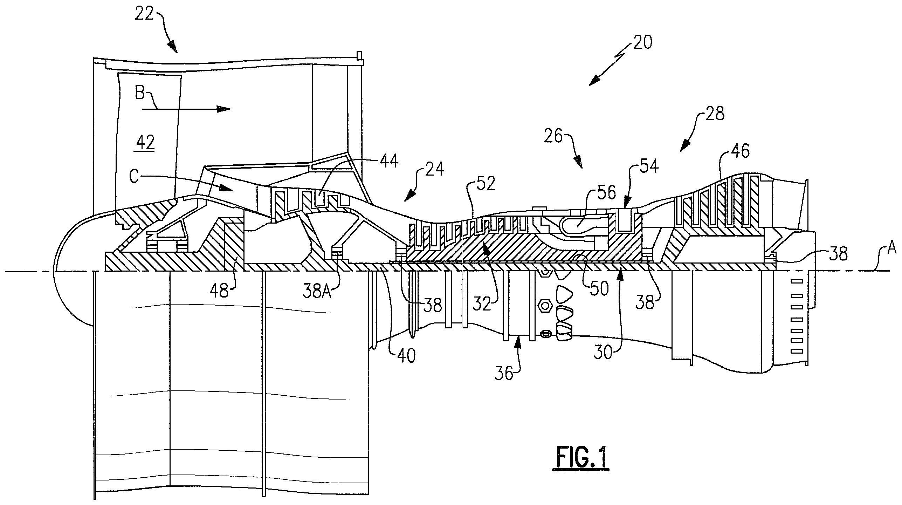

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. The low speed spool 30 generally includes an inner shaft 40 that interconnects a fan 42, a low pressure (or first) compressor section 44 and a low pressure (or first) turbine section 46. The inner shaft 40 is connected to the fan 42 through a geared architecture 48 to drive the fan 42 at a lower speed than the low speed spool 30. A #2 bearing support 38A located within the compressor section 24 supports a forward end of the inner shaft 40. It should be understood that various bearing systems 38 at various locations may alternatively or additionally be provided.

The high speed spool 32 includes an outer shaft 50 that interconnects a high pressure (or first) compressor section 52 and high pressure (or first) turbine section 54. A combustor 56 is arranged between the high pressure compressor 52 and the high pressure turbine 54. As used herein, a "high pressure" compressor or turbine experiences a higher pressure than a corresponding "low pressure" compressor or turbine.

The core airflow C is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion.

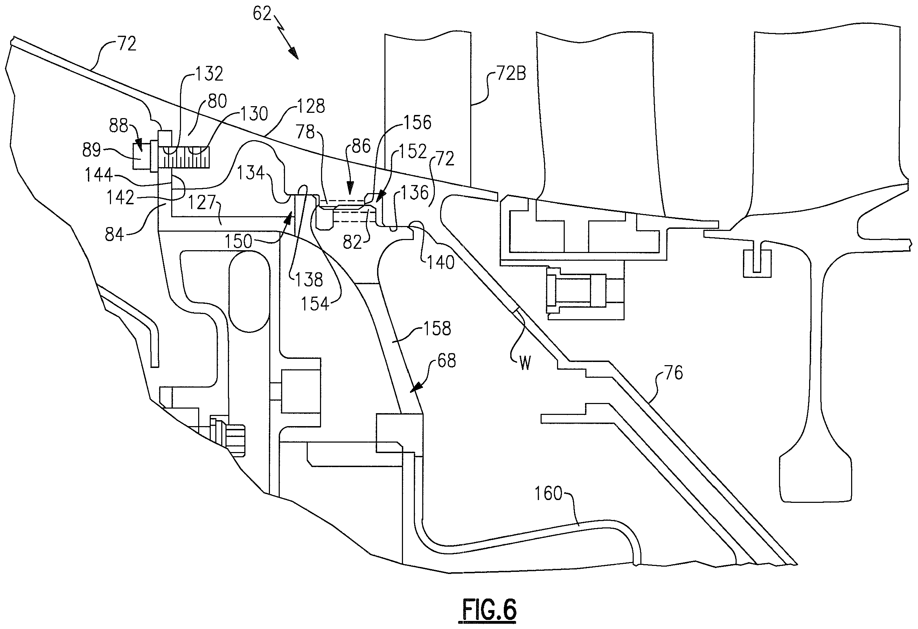

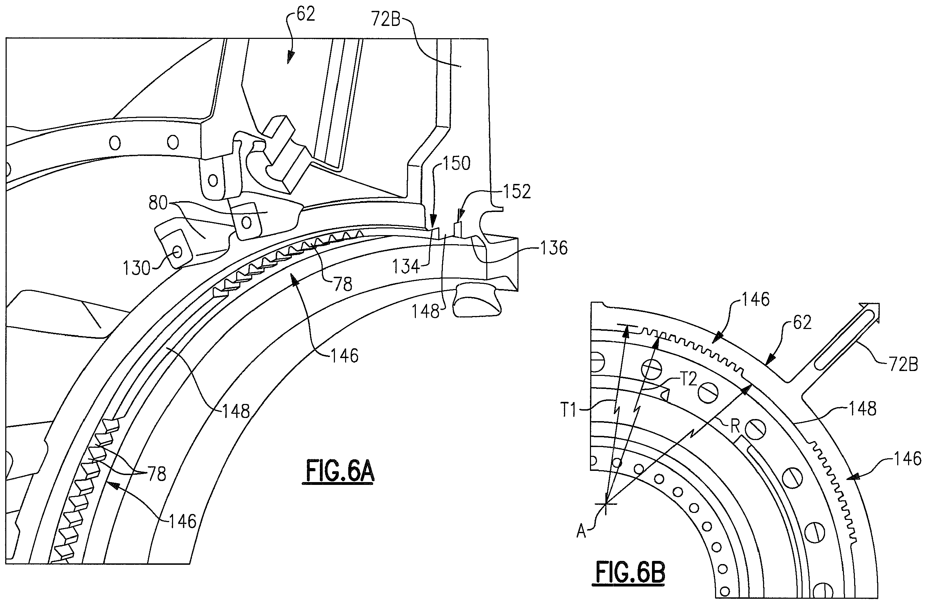

The engine 20 in one example is a high-bypass geared aircraft engine. In a further example, the engine 20 bypass ratio is greater than about six (6:1), with an example embodiment being greater than ten (10:1), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one example, the geared architecture 48 includes a sun gear, a ring gear, and intermediate gears arranged circumferentially about the sun gear and intermeshing with the sun gear and the ring gear. The intermediate gears are star gears grounded to a flex support 68 (shown in Figure 6) against rotation about the axis A. The sun gear is supported by the low speed spool 30, and the ring gear is interconnected to the fan 42.

In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine.

A significant amount of thrust is provided by a bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tambient deg R) / 518.7)^0.5]. The "Low corrected fan tip speed" as disclosed herein according to one non-limiting embodiment is less than about 1150 ft / second (350.5 m/s). The above parameters for the engine 20 are intended to be exemplary.

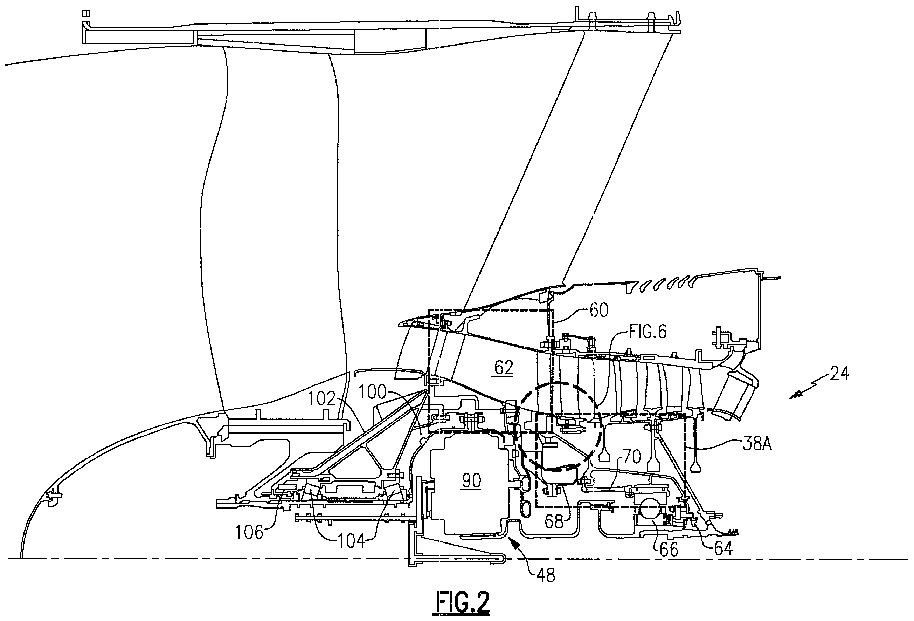

With reference to Figure 2, the engine static structure 36 proximate the compressor section 24 includes a front center body assembly 60 adjacent to the #2 bearing support 38A. The front center body assembly 60 generally includes a front center body support 62. The #2 bearing support 38A generally includes a seal package 64, a bearing package 66 and a centering spring 70.

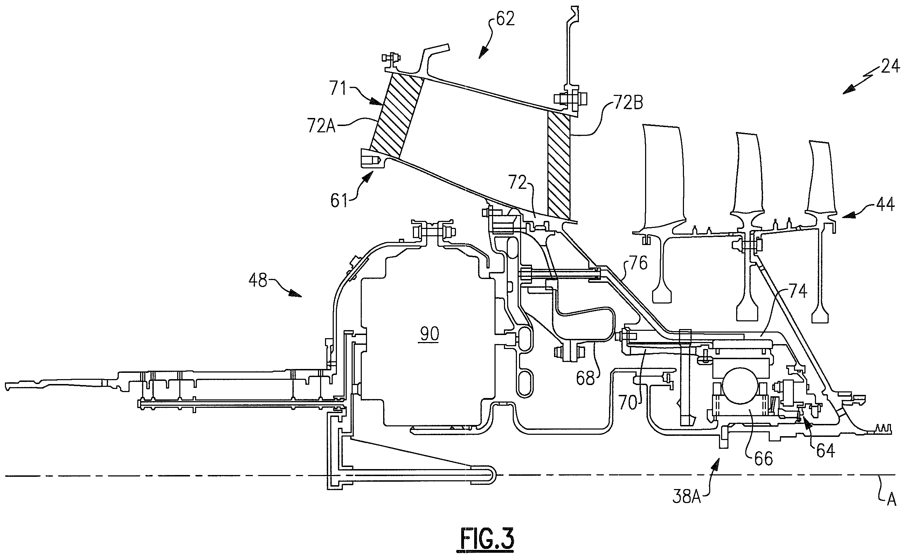

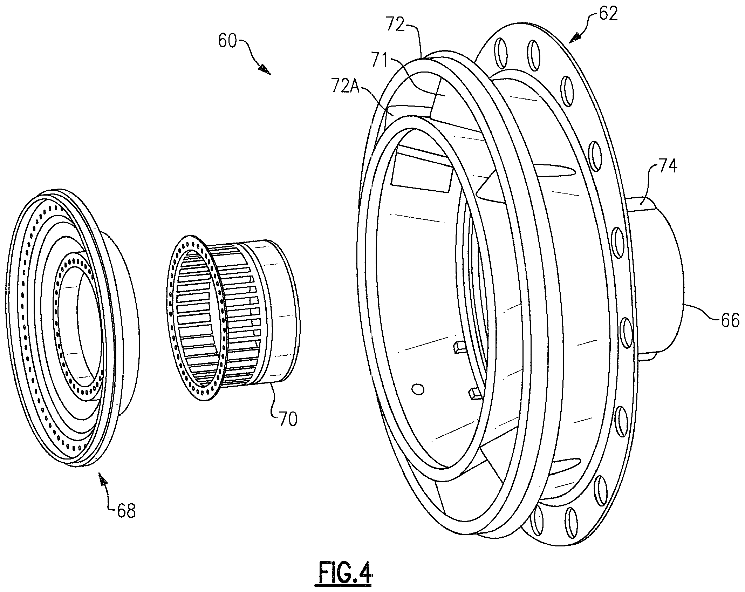

With reference to Figures 2 and 3, a flex support 68 provides a flexible attachment of the geared architecture 48 within the front center body support 62 (also illustrated in Figure 4). The flex support 68 reacts the torsional loads from the geared architecture 48 and facilitates vibration absorption as well as other support functions. The centering spring 70 is a generally cylindrical cage-like structural component with a multiple of beams that extend between flange end structures (also illustrated in Figure 4). The centering spring 70 resiliently positions the bearing package 66 with respect to the low spool 30. In one embodiment, the beams are double-tapered beams arrayed circumferentially to control a radial spring rate that may be selected based on a plurality of considerations including, but not limited to, bearing loading, bearing life, rotor dynamics, and rotor deflection considerations.

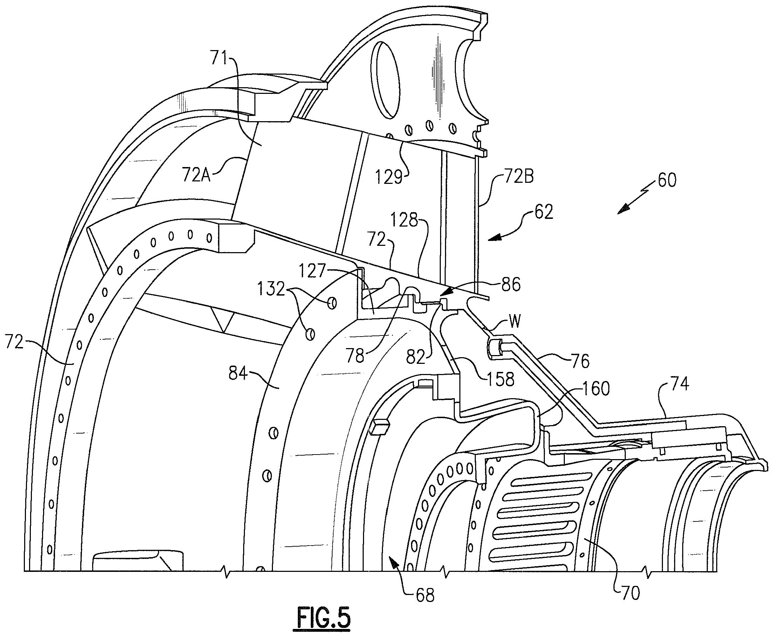

The front center body support 62 includes a front center body section 72 and a bearing section 74 defined about axis A with a frustro-conical interface section 76 therebetween (Figure 5). The front center body section 72 at least partially defines the core flowpath into the low pressure compressor 44. The front center body section 72 includes an annular core passage with circumferentially arranged front center body vanes 71 having leading and trailing edges 72A, 72B shown in section in Figure 3. The bearing section 74 is defined radially inward of the front center body section 72. The bearing section 74 locates the bearing package 66 and the seal package 64 with respect to the low spool 30. The frustro-conical interface section 76 combines the front center body section 72 and the bearing section 74 to form a unified load path, substantially free of kinks typical of a conventional flange joint, from the bearing package 66 to the outer periphery of the engine static structure 36. The frustro-conical interface section 76 may include a weld W (Figure 5) or, alternatively, be an integral section such that the front center body support 62 is a unitary component.

The integral, flange-less arrangement of the frustro-conical interface section 76 facilitates a light weight, reduced part count architecture with an increased ability to tune the overall stiffness and achieve rotor dynamic requirements. Such an architecture also further integrates functions such as oil and air delivery within the bearing compartment which surrounds bearing package 66.

With reference to Figure 6, the front center body support 62 includes mount features to receive the flex support 68. The flex support 68 includes a conical support 158 that supports an integral flex member 160, which provides a fold for absorbing vibrations. In one disclosed non-limiting embodiment, the mount features of the front center body support 62 includes first splines 78, which are internal in the example, and radially inward directed fastener bosses 80 on the front center body section 72. The flex support 68 includes corresponding second splines 82, which are external in the example, and radially outwardly directed fastener flange 84. The flex support 68 is received into the front center body support 62 at a splined interface 86 formed by first and second splines 78, 82 and retained therein such that fastener flange 84 abuts fastener bosses 80. The splined interface 86 transfers torque between the first and second splines 78, 82. A set of fasteners 88, such as bolts, are threaded into the fastener bosses 80 and the fastener flange 84 to mount the flex support 68 within the front center body support 62. The fasteners 88 include heads 89 facing forward for access from the front of the engine 20.

Referring to Figures 5-6A, the central body support 62 provides an inner annular wall 128 for the core airflow C. The vanes 71 interconnect the inner annular wall 128 to an outer annular wall 129 to provide a unitary structure. The first splines 78 include tooth groups 146 including multiple teeth. The tooth groups 146 are circumferentially spaced apart from one another with untoothed regions arranged between the tooth groups 146. The vanes 71 are circumferentially aligned with an untoothed region to structurally reinforce the interface between the first and second splines 78, 82. The second splines 82 include corresponding tooth groups that are configured to circumferentially align and mate with the tooth groups 146 of the first splines 146. Corresponding untoothed regions are arranged between the tooth groups of the second splines 82.

In the example, the fastener bosses 80 are arranged in clusters circumferentially spaced from one another, as shown in Figure 6A. The fastener bosses 80 are aligned with the tooth groups 146. However, it should be understood that the fastener bosses 80 may be arranged in other configurations. The fastener flange 84 extends radially outward from an annular flange 127 that axially extends from the second splines 82. The fastener flange 84 includes an aft surface 142 that abuts a face 144 of the fastener bosses 80 to axially locate the flex support 68 relative to the central body support 62. The fastener flange 84 includes apertures 132 that are arranged in clusters circumferentially spaced from one another and receive the fasteners 88, which are secured in holes 130 of the fastener bosses 80. The fastener flange 84 may include interruptions or recesses that permit componentry to pass through the flex support 68 at the perimeter of the fasteners flange 84.

The untoothed region is provided by a stiffening rail 148 protruding radially inward from the central body section 72 that provides the inner annular wall 128. The central body support 62 includes an annular recess 150 and an annular pocket 152 that are axially spaced apart from one another to provide first and second lateral sides 154, 156 on the stiffening rail 148. The teeth of the tooth groups 146 include roots provided at a first tooth radius T1 and extend radially inward to crests provided at a second tooth radius T2. As shown in Figure 6B, the stiffening rail 148 extends radially inward to a rail radius R that is less than the first tooth radius T1, and in one example, equal to the second tooth radius T2. The stiffening rail 148 and its circumferential alignment with the vanes 71 ensures improved cylindricity of the central body section 72 during engine operation.

The central body support 62 includes a first inner face 134 arranged near the first spline 78 and is provided by the annular recess 150. The flex support 68 includes a first outer face 138 arranged in an interference fit relationship at room temperature with the first inner face 134 to radially locate the flex support 68 relative to the central body support 62. A second inner face 136 is provided on the central body support 62, and the flex support 68 includes a second outer face 140 arranged in an interference fit relationship at room temperature with the second inner face 136. The first inner and outer faces 134, 138 are arranged forward of the first spline 78, and the second inner and outer faces 136, 140 are arranged aft of the first spline 78. The second outer face 140 is smaller than the first outer face 138 to facilitate assembly and disassembly of the flex support 68 from the front of the engine 20.

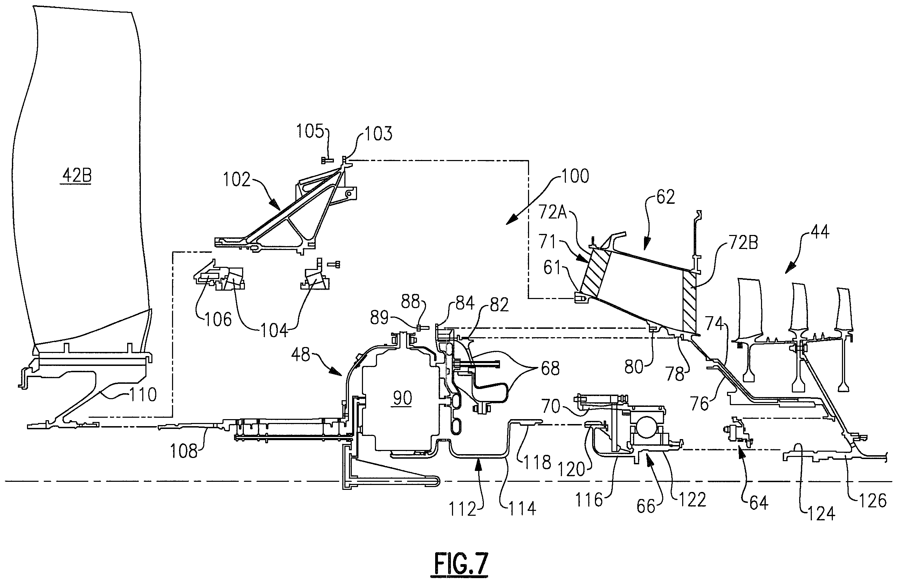

With reference to Figure 7, the heads 89 of the fasteners 88 are directed forward to provide access from a forward section of the front center body assembly 60 opposite the bearing package 66 of the number two bearing system 38A. The fasteners 88 are thereby readily removed to access a gearbox 90 of the geared architecture 48.

A fan shaft bearing support front wall 102 aft of the fan 42 is mounted to a forward section of the front center body support 62 to provide access to the geared architecture 48 from the front of the engine 20. The front wall 102 includes a flange 103 mountable to the front center body support 62 at the flange 61 by a multiple of fasteners 105, which fasteners 105 may in one non-limiting embodiment be bolts. The front wall 102 and the front center body support 62 define a bearing compartment 100 (also shown in Figure 2) which mounts to the bearing package 66. The front wall 102 is removable such that the gearbox 90 may be accessed as a module. The gearbox 90 may thereby be accessed to facilitate rapid on-wing service.

It should be appreciated that various bearing structures 104 (illustrated schematically and in Figure 2) and seals 106 (illustrated schematically and in Figure 2) may be supported by the front wall 102 to contain oil and support rotation of an output shaft 108. The output shaft 108 connects with the geared architecture 48 to drive the fan 42. Fan blades 42B extend from a fan hub 110 which are mounted to the output shaft 108 for rotation therewith. It should be appreciated that the bearing structures 104 and seals 106 may, in the disclosed non-limiting embodiment may be disassembled with the front wall 102 as a unit after removal of the fan hub 110.

The gearbox 90 is driven by the low spool 30 (Figure 1) through a coupling shaft 112. The coupling shaft 112 transfers torque through the bearing package 66 to the gearbox 90 as well as facilitates the segregation of vibrations and other transients. The coupling shaft 112 generally includes a forward coupling shaft section 114 and an aft coupling shaft section 116 which extends from the bearing package 66, however, more or fewer pieces may be used to provide the coupling shaft 112. The forward coupling shaft section 114 includes an interface spline 118 which mates with an aft spline 120 of the aft coupling shaft section 116. An interface spline 122 of the aft coupling shaft section 116 connects the coupling shaft 112 to the low spool 30 through, in this non limiting embodiment, splined engagement with a spline 124 on a low pressure compressor hub 126 of the low pressure compressor 44.

As a high level summary, the front architecture of the engine 20 is disassembled by detaching the fan module from a fan shaft bearing support. The fan shaft bearing support (front wall 102) remains secured to the central body support 62 over the gear box 90. The fan shaft bearing support (front wall 102) is detached from the central support body 62 without removing the gear box 90. The forward-facing fasteners 88 are accessed and removed. The first and second splines 78, 82 are decoupled, and the gear box 90 is removed with the fan shaft bearing support (front wall 102) and the flex support 68. The bearing 38A is left undisturbed.

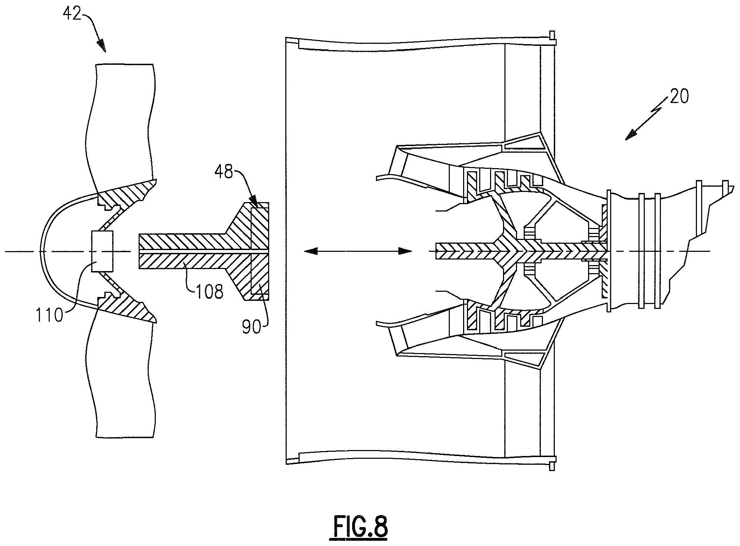

To remove and isolate the gearbox 90, the fan hub 110 is disassembled from the output shaft 108. The multiple of fasteners 105 are then removed such that the front wall 102 is disconnected from the front center body support 62; the front wall 102 is thereafter removed from the engine. The multiple of fasteners 88 are then removed from the front of the engine 20. The geared architecture 48 is then slid forward out of the front center body support 62 such that the interface spline 118 is slid off the aft spline 120 and the outer spline 82 is slid off the internal spline 78. The geared architecture 48 is thereby removable from the engine 20 as a module (Figure 8; illustrated schematically). It should be appreciated that other componentry may need to be disassembled to remove the geared architecture 48 from the engine 20, however, such disassembly is relatively minor and need not be discussed in detail. It should be further appreciated that other components such as the bearing package 66 and seal 64 are also now readily accessible from the front of the engine 20.

Removal of the gearbox 90 from the front of the engine 20 as disclosed saves significant time and expense. The geared architecture 48, is removable from the engine 20 as a module and does not need to be further disassembled. Moreover, although the geared architecture 48 must be removed from the engine to gain access to the bearing package 66 and the seal 64, the geared architecture 48 does not need to be removed from the engine 20 to gain access to the engine core itself.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the invention may be practiced other than as specifically described. For that reason the appended claims should be studied to determine true scope and content.

## Claims

1. A gas turbine engine (10) comprising:
a spool (30);
a fan rotatable about an axis; and
a geared architecture (48) interconnecting the spool (30) and the fan (42) for driving the fan (42) at a lower speed than the spool (30),
**characterised in that** the engine further comprises:
a central body support (62) providing an inner annular wall for a core flow path, the central body support (62) including first splines (78); and
a flex support (68) interconnecting the geared architecture (48) to the central body support (62), and including second splines (82) that intermesh with the first splines (78) for transferring torque therebetween.

2. The gas turbine engine according to claim 1, wherein the central body support (62) includes circumferentially spaced apart vanes (71) radially extending between and interconnecting the inner annular wall and an outer annular wall.

3. The gas turbine engine according to claim 1 or 2, wherein the first splines (78) include tooth groups (146) including multiple teeth, the tooth groups (146) circumferentially spaced apart from one another with untoothed regions (148) arranged between the tooth groups (146).

4. The gas turbine engine according to claims 2 and 3, wherein the vanes (71) are circumferentially aligned with the untoothed regions (148).

5. The gas turbine engine according to claim 3 or 4, wherein the second splines (82) include corresponding tooth groups configured to circumferentially align and mate with the tooth groups (146) of the first splines (78), and corresponding untoothed regions arranged between the tooth groups (146) of the corresponding tooth groups (146).

6. The gas turbine engine according to any of claims 3 to 5, wherein the central body support (62) includes multiple fastener bosses (80) circumferentially spaced from one another, the fastener bosses (80) aligned with the tooth groups (146).

7. The gas turbine engine according to any of claims 3 to 6, wherein the untoothed region (148) is provided by a stiffening rail (148) protruding radially inward from a central body section (72) providing the inner annular wall (128).

8. The gas turbine engine according to claim 7, wherein the central body support (62) includes an annular recess (150) and an annular pocket (152) axially spaced apart from one another to provide first and second lateral sides (154,156) on the stiffening rail (148).

9. The gas turbine engine according to claim 7 or 8, wherein the tooth groups (146) include internal teeth having roots provided at a first tooth radius (T1) and extending radially inward to crests provided at a second tooth radius (T2), the stiffening rail (148) extending radially inward to a rail radius (R) that is less than the first tooth radius (T1).

10. The gas turbine engine according to any preceding claim, wherein the geared architecture (48) includes an epicyclic gear train having a sun gear, a ring gear, and intermediate gears arranged circumferentially about the sun gear and intermeshing with the sun gear and the ring gear, for example wherein the intermediate gears are star gears grounded to the flex support (68) against rotation about the axis, the sun gear is arranged to be supported by the spool (30), and the ring gear is arranged to be interconnected to the fan (42).

11. The gas turbine engine according to any preceding claim, wherein the central body support (62) includes a first inner face (134) arranged near the first spline (78), and the flex support (68) includes a first outer face (138) arranged in an interference fit relationship with the first inner face (134) to radially locate the flex support (68) relative to the central body support (62), and wherein, optionally, the central body support (62) includes a second inner face (136), and the flex support (68) includes a second outer face (140) arranged in an interference fit relationship with the second inner face (136), the first inner and outer faces (134,138) arranged forward of the first spline (78) and the second inner and outer faces (136,140) arranged aft of the first spline (78), the second outer face (140) being positioned radially inward relative to the first outer face (138).

12. The gas turbine engine according to any preceding claim, comprising fasteners (88) securing the flex support (68) to the central body support (62), the fasteners (88) including heads (89) facing forward, wherein the central body support (62) optionally includes circumferentially spaced fastener bosses (80), and the flex support (68) optionally includes a radially outward extending fastener flange (84) abutting the fastener bosses (80) to axially locate the flex support (68) relative to the central body support (62).

13. The gas turbine engine according to claim 12, wherein the fastener flange (84) includes apertures (132) arranged circumferentially spaced from one another and receiving the fasteners (88).

14. A method of disassembling a front architecture of a gas turbine engine (10), comprising the steps of:
accessing forward-facing fasteners (88) that secure a central body support (62) to a flex support (68), wherein the flex support (68) includes a geared architecture (48) supported thereon for driving a fan (42) at a lower speed than a spool (30);
removing the fasteners (88); and
decoupling first and second splines (78,82) respectively provided on the central body support (62) and the flex support (68), wherein the central body support (62) provides an inner annular wall for a core flow path of the engine (10).

15. The method according to claim 14, wherein:
the accessing step includes the step of detaching a fan module from a fan shaft bearing support (102), with the fan shaft bearing support (102) remaining secured to the central body support (62);
the accessing step includes the step of detaching the fan shaft bearing support (102) from the central support body (62) without removing the geared architecture (48); and/or
the decoupling step includes removing a geared architecture (48) module that includes the geared architecture and the flex support (68), wherein the decoupling step leaves undisturbed a bearing supporting a front of a spool operatively connectable with the geared architecture (48).

## Patentansprüche

1. Gasturbinentriebwerk (10), das Folgendes umfasst:
eine Spule (30);
einen Ventilator, der um eine Achse drehbar ist; und
eine Getriebearchitektur (48), die mit der Spule (30) und dem Ventilator (42) verbunden ist, um den Ventilator (42) mit einer niedrigeren Geschwindigkeit als die Spule (30) anzutreiben,
**dadurch gekennzeichnet, dass** das Triebwerk ferner Folgendes umfasst:
einen Zentralkörperträger (62), der eine innere ringförmige Wand für einen Kernströmungsweg bereitstellt, wobei der Zentralkörperträger (62) erste Kerbverzahnungen (78) einschließt; und
einen flexiblen Träger (68), der die Getriebearchitektur (48) mit dem Zentralkörperträger (62) verbindet und zweite Kerbverzahnungen (82) umfasst, die mit den ersten Kerbverzahnungen (78) ineinandergreifen, um ein Drehmoment dazwischen zu übertragen.

2. Gasturbinentriebwerk nach Anspruch 1, wobei der Zentralkörperträger (62) in Umfangsrichtung beabstandete Schaufeln (71) einschließt, die sich radial zwischen der inneren ringförmigen Wand und einer äußeren ringförmigen Wand erstrecken und diese verbinden.

3. Gasturbinentriebwerk nach Anspruch 1 oder 2, wobei die ersten Kerbverzahnungen (78) Zahngruppen (146) einschließen, die mehrere Zähne einschließen, wobei die Zahngruppen (146) in Umfangsrichtung durch ungezahnte Regionen (148) voneinander beabstandet sind, die zwischen den Zahngruppen (146) angeordnet sind.

4. Gasturbinentriebwerk nach Anspruch 2 und 3, wobei die Schaufeln (71) im Umfangsrichtung an den ungezahnten Regionen (148) ausgerichtet sind.

5. Gasturbinentriebwerk nach Anspruch 3 oder 4, wobei die zweiten Kerbverzahnungen (82) entsprechende Zahngruppen, die dazu konfiguriert sind, sich in Umfangsrichtung an den Zahngruppen (146) der ersten Kerbverzahnungen (78) auszurichten und mit diesen zu vereinigen, und entsprechende ungezahnte Regionen einschließen, die zwischen den Zahngruppen (146) der entsprechenden Zahngruppen (146) angeordnet sind.

6. Gasturbinentriebwerk nach einem der Ansprüche 3 bis 5, wobei der Zentralkörperträger (62) mehrere Befestigungsmitteldome (80) einschließt, die in Umfangsrichtung voneinander beabstandet sind, wobei die Befestigungsmitteldome (80) an den Zahngruppen (146) ausgerichtet sind.

7. Gasturbinentriebwerk nach einem der Ansprüche 3 bis 6, wobei die ungezahnte Region (148) durch einen Aussteifungsriegel (148) bereitgestellt ist, der von dem Zentralkörperträgerbereich (72), der die innere ringförmige Wand (128) bereitstellt, radial nach innen vorsteht.

8. Gasturbinentriebwerk nach Anspruch 7, wobei der Zentralkörperträger (62) eine ringförmige Aussparung (150) und eine ringförmige Tasche (152) einschließt, die radial voneinander beabstandet sind, um eine erste und eine zweite laterale Seite (154, 156) auf dem Aussteifungsriegel (148) bereitzustellen.

9. Gasturbinentriebwerk nach Anspruch 7 oder 8, wobei die Zahngruppen (146) interne Zähne einschließen, die Wurzeln aufweisen, die bei einem ersten Zahnradius (T1) bereitgestellt sind und sich radial nach innen zu Kuppen erstrecken, die bei einem zweiten Zahnradius (T2) bereitgestellt sind, wobei der Versteifungsriegel (148) sich radial nach innen zu einem Riegelradius (R) erstreckt, der geringer als der erste Zahnradius (T1) ist.

10. Gasturbinentriebwerk nach einem der vorhergehenden Ansprüche, wobei die Getriebearchitektur (48) einen epizyklischen Getriebezug einschließt, der ein Sonnenzahnrad, ein Hohlrad und Zwischenzahnräder aufweist, die in Umfangsrichtung um das Sonnenzahnrad angeordnet sind und in das Sonnenzahnrad und das Hohlrad eingreifen, wobei zum Beispiel die Zwischenzahnräder Sternenzahnräder sind, die gegen eine Drehung um die Achse an dem flexiblen Träger (68) fixiert sind, das Sonnenzahnrad dazu angeordnet ist, von der Spule (30) getragen zu werden, und das Hohlrad dazu angeordnet ist, mit dem Ventilator (42) verbunden zu sein.

11. Gasturbinentriebwerk nach einem der vorhergehenden Ansprüche, wobei der Zentralkörperträger (62) eine erste Innenfläche (134), die in der Nähe der ersten Kerbverzahnung (78) angeordnet ist, einschließt, und der flexible Träger (68) eine erste Außenfläche (138) einschließt, die in einem Presspassungsverhältnis mit der ersten Innenfläche (134) dazu angeordnet ist, den flexiblen Träger (68) relativ zu dem Zentralkörperträger (62) radial zu platzieren, und wobei optional der Zentralkörperträger (62) eine zweite Innenfläche (136) einschließt, und der flexible Träger (68) eine zweite Außenfläche (140) einschließt, die in einem Presspassungsverhältnis mit der zweiten Innenfläche (136) angeordnet ist, wobei die erste Innen- und die erste Außenfläche (134, 138) vor der ersten Kerbverzahnung (78) angeordnet sind und die zweite Innen- und die zweite Außenfläche (136, 140) hinter der ersten Kerbverzahnung (78) angeordnet sind, wobei die zweite Außenfläche (140) relativ zu der ersten Außenfläche (138) radial nach innen positioniert ist.

12. Gasturbinentriebwerk nach einem der vorhergehenden Ansprüche, umfassend Befestigungsmittel (88), die den flexiblen Träger (68) an dem Zentralkörperträger (62) sichern, wobei die Befestigungsmittel (88) Köpfe (89) einschließen, die nach vorn gewandt sind, wobei der Zentralkörperträger (62) optional in Umfangsrichtung beabstandete Befestigungsmitteldome (80) einschließt und der flexible Träger (68) optional einen sich radial nach außen erstreckenden Befestigungsmittelflansch (84) einschließt, der an die Befestigungsmitteldome (80) anstößt, um den flexiblen Träger (68) relativ zu dem Zentralkörperträger (62) axial zu platzieren.

13. Gasturbinentriebwerk nach Anspruch 12, wobei der Befestigungsmittelflansch (84) Öffnungen (132) einschließt, die in Umfangsrichtung voneinander beabstandet angeordnet sind und die Befestigungsmittel (88) aufnehmen.

14. Verfahren zur Demontage einer Vorderarchitektur eines Gasturbinentriebwerks (10), das die Folgenden Schritte umfasst:
Zugreifen auf nach vorn gewandte Befestigungsmittel (88), die einen Zentralkörperträger (62) an einem flexiblen Träger (68) sichern, wobei der flexible Träger (68) eine Getriebearchitektur (48) umfasst, die darauf zum Antreiben eines Ventilators (42) mit einer niedrigeren Geschwindigkeit als eine Spule (30) getragen wird;
Entfernen der Befestigungsmittel (88); und
Entkoppeln von einer ersten und einer zweiten Kerbverzahnung (78, 82), die jeweils auf dem Zentralkörperträger (62) und dem flexiblen Träger (68) bereitgestellt sind, wobei der Zentralkörperträger (62) eine innere ringförmige Wand für einen Kernströmungsweg des Triebwerks (10) bereitstellt.

15. Verfahren nach Anspruch 14, wobei:
der Schritt des Zugreifens den Schritt des Lösens des Ventilatormoduls von einem Ventilatorwellenlagerträger (102) einschließt, wobei der Ventilatorwellenlagerträger (102) an dem Zentralkörperträger (62) gesichert bleibt;
der Schritt des Zugreifens den Schritt des Lösens des Ventilatorwellenlagerträgers (102) von dem Zentralträgerkörper (62) einschließt, ohne die Getriebearchitektur (48) zu entfernen; und/oder
der Schritt des Entkoppelns ein Entfernen eines Getriebearchitektur-(48)-Moduls einschließt, das die Getriebearchitektur und den flexiblen Träger (68) einschließt, wobei der Schritt des Entkoppelns ein Lager, das eine Vorderseite einer Spule stützt, die operativ mit der Getriebearchitektur (48) verbunden werden kann, unberührt lässt.

## Revendications

1. Moteur à turbine à gaz (10) comprenant :
une bobine (30) ;
une soufflante pouvant tourner autour d'un axe ; et
une architecture à engrenages (48) interconnectant la bobine (30) et la soufflante (42) pour entraîner la soufflante (42) à une vitesse inférieure à celle de la bobine (30),
**caractérisé en ce que** le moteur comprend en outre :
un support de corps central (62) constituant une paroi annulaire interne pour une trajectoire de flux primaire, le support de corps central (62) comportant des premières cannelures (78) ; et
un support flexible (68) interconnectant l'architecture à engrenages (48) au support de corps central (62), et comportant des secondes cannelures (82) qui s'engrènent avec les premières cannelures (78) pour transférer un couple entre elles.

2. Moteur à turbine à gaz selon la revendication 1, dans lequel le support de corps central (62) comporte des aubes espacées circonférentiellement (71) s'étendant radialement entre la paroi annulaire interne et une paroi annulaire externe et les interconnectant.

3. Moteur à turbine à gaz selon la revendication 1 ou 2, dans lequel les premières cannelures (78) comportent des groupes de dents (146) incluant de multiples dents, les groupes de dents (146) étant espacés circonférentiellement les uns des autres par des régions non dentées (148) agencées entre les groupes de dents (146).

4. Moteur à turbine à gaz selon les revendications 2 et 3, dans lequel les aubes (71) sont alignées circonférentiellement avec les régions non dentées (148).

5. Moteur à turbine à gaz selon la revendication 3 ou 4, dans lequel les secondes cannelures (82) comportent des groupes de dents correspondants configurés pour s'aligner circonférentiellement et s'accoupler avec les groupes de dents (146) des premières cannelures (78), et des régions non dentées correspondantes agencées entre les groupes de dents (146) des groupes de dents correspondants (146).

6. Moteur à turbine à gaz selon l'une quelconque des revendications 3 à 5, dans lequel le support de corps central (62) comporte de multiples bossages d'attaches (80) espacés circonférentiellement les uns des autres, les bossages d'attaches (80) étant alignés avec les groupes de dents (146).

7. Moteur à turbine à gaz selon l'une quelconque des revendications 3 à 6, dans lequel la région non dentée (148) est constituée d'un rail raidisseur (148) faisant saillie radialement vers l'intérieur d'une section de corps central (72) constituant la paroi annulaire interne (128).

8. Moteur à turbine à gaz selon la revendication 7, dans lequel le support de corps central (62) comporte un creux annulaire (150) et une poche annulaire (152) espacés axialement l'un de l'autre pour fournir des premier et second côtés latéraux (154, 156) sur le rail raidisseur (148).

9. Moteur à turbine à gaz selon la revendication 7 ou 8, dans lequel les groupes de dents (146) comportent des dents internes ayant des racines prévues au niveau d'un premier rayon de dent (T1) et s'étendant radialement vers l'intérieur vers des crêtes prévues au niveau d'un second rayon de dent (T2), le rail raidisseur (148) s'étendant radialement vers l'intérieur d'un rayon de rail (R) qui est inférieur au premier rayon de dent (T1).

10. Moteur à turbine à gaz selon l'une quelconque des revendications précédentes, dans lequel l'architecture à engrenages (48) comporte un train d'engrenages épicycloïdal ayant un planétaire, une couronne et des engrenages intermédiaires agencés circonférentiellement autour du planétaire et s'engrenant avec le planétaire et la couronne, dans lequel par exemple les engrenages intermédiaires sont des réducteurs épicycloïdaux planétaires mis à la masse sur le support flexible (68) pour empêcher une rotation autour de l'axe, le planétaire est agencé pour être supporté par le corps (30), et la couronne est agencée pour être interconnectée à la soufflante (42).

11. Moteur à turbine à gaz selon l'une quelconque des revendications précédentes, dans lequel le support de corps central (62) comporte une première face interne (134) agencée près de la première cannelure (78), et le support flexible (68) comporte une première face externe (138) agencée dans une relation d'ajustement serré avec la première face interne (134) pour positionner radialement le support flexible (68) par rapport au support de corps central (62), et dans lequel, éventuellement, le support de corps central (62) comporte une seconde face interne (136), et le support flexible (68) comporte une seconde face externe (140) agencée dans une relation d'ajustement serré avec la seconde face interne (136), les première faces interne et externe (134, 138) étant agencées à l'avant de la première cannelure (78) et les secondes faces interne et externe (136, 140) étant agencées à l'arrière de la première cannelure (78), la seconde face externe (140) étant positionnée radialement vers l'intérieur par rapport à la première face externe (138).

12. Moteur à turbine à gaz selon l'une quelconque des revendications précédentes, comprenant des attaches (88) fixant le support flexible (68) sur le support de corps central (62), les attaches (88) incluant des têtes (89) orientées vers l'avant, dans lequel le support de corps central (62) comporte éventuellement des bossages d'attaches espacés circonférentiellement (80), et le support flexible (68) comporte éventuellement une bride d'attache s'étendant radialement vers l'extérieur (84) venant en butée contre les bossages d'attaches (80) pour positionner axialement le support flexible (68) par rapport au support de corps central (62) .

13. Moteur à turbine à gaz selon la revendication 12, dans lequel la bride d'attache (84) comporte des ouvertures (132) agencées de manière circonférentiellement espacées les unes des autres et recevant les attaches (88).

14. Procédé de démontage d'une architecture avant d'un moteur à turbine à gaz (10) comprenant les étapes suivantes :
accès à des attaches orientées vers l'avant (88) qui fixent un support de corps central (62) sur un support flexible (68), dans lequel le support flexible (68) comporte une architecture à engrenages (48) supportée sur celui-ci pour entraîner une soufflante (42) à une vitesse inférieure à celle d'un corps (30) ;
retrait des attaches (88) ; et
désaccouplement des première et seconde cannelures (78, 82) prévues respectivement sur le support de corps central (62) et le support flexible (68), dans lequel le support de corps central (62) fournit une paroi annulaire interne pour une trajectoire de flux primaire du moteur (10).

15. Procédé selon la revendication 14, dans lequel :
l'étape d'accès comporte l'étape de détachement d'un module de soufflante d'un support de palier d'arbre de soufflante (102), le support de palier d'arbre de soufflante (102) restant fixé au support de corps central (62) ;
l'étape d'accès comporte l'étape de détachement du support de palier d'arbre de soufflante (102) du corps de support central (62) sans retrait de l'architecture à engrenages (48) ; et/ou l'étape de désaccouplement comporte le retrait d'un module d'architecture à engrenages (48) qui comporte l'architecture à engrenages et le support flexible (68), dans lequel l'étape de désaccouplement laisse en l'état un palier supportant une parie avant d'une bobine pouvant être reliée opérationnellement à l'architecture à engrenages (48).
